# EUROPÄISCHE PATENTANMELDUNG

(11) **EP 3 790 134 A1**
(43) Veröffentlichungstag der Anmeldung: **10.03.2021**
(21) Anmeldenummer: 20189888.9
(22) Anmeldetag: 06.08.2020
(51) Int. Cl.: H02G 3/08, H02G 15/013, H02G 3/22

(54) **KABELEINFÜHRUNG**

(30) Priorität: 05.09.2019 CH 11252019
(71) Anmelder: Agro AG, 5502 Hunzenschwil (CH)
(72) Erfinder: ROSAMILIA, Valerio, 5502 Hunzenschwil (CH)
(74) Vertreter: Rentsch Partner AG

(57) **Zusammenfassung**

Die Erfindung betrifft eine Kabeleinführung (1) zur Einführung von mindestens einem Kabel (2) in ein Gehäuse mit einem Oberteil (4) mit einer sich von einer Montageseite (9) in eine erste Richtung erstreckende Vertiefung (8) und mit mindestens einer in der Vertiefung (8) angeordneten ersten Durchführöffnung (6) zum Durchführen des mindestens einen Kabels (2) durch die Kabeleinführung (1). Die Kabeleinführung (1) umfasst weiter mindestens ein zumindest bereichsweise in der Vertiefung (8) angeordnetes Abdichtelement (5) mit mindestens einer zweiten Durchführöffnung (7) zum Abdichten des mindestens einen durchgeführten Kabels (2), sowie Befestigungsmittel (10) zur Wirkverbindung der Kabeleinführung (1) mit einer Gehäusewand (3).

## Beschreibung

Die Erfindung liegt auf dem Gebiet der Kabeleinführungen, insbesondere der Mehrfachkabeleinführungen, zum Einführen eines oder mehrerer Kabel in ein Gehäuse.

Kabeleinführungen zum Durchführen und Abdichten von mehreren Kabeln durch eine Öffnung in einem Gehäuse eines elektrischen Gerätes sind aus dem Stand der Technik bekannt. Zum Durchführen von mehreren Kabeln sind Kabeleinführungen bekannt, die einen an dem Gehäusedurchbruch befestigten Rahmen aufweisen mit darin verbauten verformbaren Einsätzen, welche die einzuführenden Kabel umgeben und abdichten:
EP2736137B1**,** publiziert am 24.08.2016 von Murrplastik Systemtechnik GmbH, beschreibt eine Vorrichtung zum Abdecken und/oder Abdichten eines zur Durchführung von mindestens einer Leitung bestimmten Wanddurchbruchs. Die Vorrichtung umfasst einen am Rand des Wanddurchbruchs befestigbaren starren Rahmen, der mindestens eine Rahmenöffnung zur Durchführung einer Leitung aufweist. An der Rahmenöffnung ist eine Trennwand aus elastomerem Material angeordnet, die dazu bestimmt ist, eine durch die betreffende Rahmenöffnung durchgeführte Leitung rings zu umschliessen.

EP1595318B1**,** publiziert am 27.12.2006 ebenfalls von Murrplastik Systemtechnik GmbH, betrifft eine Vorrichtung zum Abdecken und Abdichten eines zur Durchführung von Kabeln bestimmten Wanddurchbruchs. Die Kabeldurchführungsvorrichtung weist eine Halteplatte aus Hartgummi auf, die mehrere im Abstand voneinander angeordnete Plattenöffnungen enthält, die zur Aufnahme von Tüllen aus Weichgummi bestimmt sind. Die Tüllen weisen eine Durchgangsöffnung für ein Kabel auf und sind über einen elastisch aufweitbaren Randschlitz radial von aussen zugänglich. Der Randschlitz ermöglicht es, die Tülle an einer beliebigen Stelle auf ein Kabel aufzustecken, so dass diese durch die Durchführöffnung hindurchgreift.

DE19731448C2**,** publiziert am 25.10.2001 von Stünzi Industrieelektronik GmbH, betrifft eine Befestigungsvorrichtung für Rundkabel in Wandungen zum Befestigen, Abdichten und Zugentlasten von Kabeln. Die Vorrichtung ist als Flanschgehäuse mit integrierter Sandwichkonstruktion aufgebaut und weist mindestens ein Flanschgehäuse, eine Zwischenlage-Rückhalteplatte zur Verriegelung, eine elastische Platte und eine Gegenhalteplatte auf. Hierbei sind sowohl das Flanschgehäuse mit Durchführungen für die Kabel als auch die einzelnen Sandwichplatten mit vorgestanzten, im Durchmesser aufeinander abgestimmten Löchern in Linie zu den Flanschdurchführungen versehen, so dass Kabel mit verschiedenen Durchmessern durch das Gehäuse einführbar sind und sich beim Zurückziehen automatisch zugentlasten.

EP0901190A2**,** publiziert am 10.03.1999 von Rose-Elektrotechnik GmbH + Co KG beschreibt ein Kabel-Stecker-Durchführsystem für Gehäuse, welche elektronische Bauteile aufnehmen. Das System weist eine an einer Wandung des Gehäuses im Bereich eines Durchbruches festlegbare Haube mit mindestens einem Durchlass für das Kabel mit Stecker und mindestens einen in die Haube eingesetzten, mit der Haube und der Gehäusewandung einen Pressdruck eingehenden, flexiblen und/oder elastischen Einsatz auf. Der Einsatz weist ein zu einem Einsatzrand geschlitztes Kabel-Einlegeloch auf.

Die aus dem Stand der Technik bekannten Kabeleinführungen weisen in der Regel einen komplizierten und schwierig zu montierenden Aufbau auf. Es handelt sich um wenig variable Lösungen, so dass für unterschiedliche Problemstellungen eine Vielzahl von unterschiedlichen Komponenten erforderlich ist.

Eine Aufgabe der Erfindung besteht darin eine einfach zu konfigurierende Kabeleinführung bereitzustellen, die eine flexible und anpassbare Anwendung erlaubt. Es ist eine weitere Aufgabe der Erfindung eine Leichtbau-Kabeleinführung bereitzustellen.

Eine Kabeleinführung gemäss der Erfindung zur Einführung von mindestens einem Kabel in ein Gehäuse oder durch eine Trennwand umfasst mindestens ein Oberteil mit einer sich von einer Montageseite in eine erste Richtung erstreckenden Vertiefung. In der Vertiefung ist mindestens eine erste Durchführöffnung zum Durchführen des mindestens einen Kabels durch die Kabeleinführung angeordnet. Je nach Ausgestaltung der Kabeleinführung kann das Oberteil einen um die Vertiefung herum angeordneten Rahmen aufweisen. Mit Vorteil erstreckt sich die Vertiefung nur teilweise durch das Oberteil in die erste Richtung, so dass ein Boden der Vertiefung gebildet wird. Vorzugsweise ist die mindestens eine erste Durchführöffnung am Boden der Vertiefung angeordnet. Je nach Anwendung können in der Vertiefung auch mehrere erste Durchführöffnungen angeordnet sein. Mit Vorteil sind die multiplen ersten Durchführöffnungen in einer Matrix in der Vertiefung angeordnet.

In der Vertiefung kann zumindest bereichsweise mindestens ein Abdichtelement mit mindestens einer zweiten Durchführöffnung zum Abdichten und/oder zum Klemmen des mindestens einen durchgeführten Kabels angeordnet sein. Das mindestens eine Abdichtelement kann plattenförmig ausgestaltet sein. Es können multiple zweite Durchführöffnungen unterschiedlicher oder gleicher Durchmesser vorhanden sein. Je nach Anwendung kann das mindestens eine Abdichtelement vollständig in der Vertiefung angeordnet sein. Ebenfalls können in der Vertiefung mehrere Abdichtelemente der gleichen oder unterschiedlichen Art in der ersten Richtung hintereinander und/oder nebeneinander angeordnet sein. Alternativ kann das mindestens eine Abdichtelement eine Kabelverschraubung mit einer zweiten Durchführöffnung sein, welches bereichsweise in der Vertiefung aufgenommen ist.

In einer Ausführungsvariante des Abdichtelementes können die zweiten Durchführöffnungen initial, d.h. vor dem ersten Öffnen, durch eine Membran verschlossen sein, und erst durch Aufbringen einer Kraft, z.B. durch Durchstossen mit einem Kabel, geöffnet werden. In einer weiteren Ausführungsform kann die mindestens eine zweite Durchführöffnung initial vor dem Einführen eines Kabels von einem zurückklappbaren oder heraustrennbaren Bereich verdeckt sein, welcher im umgeklappten oder herausgetrennten Zustand die Durchführöffnung für das Kabel freigibt. Das Abdichtelement kann hierfür einen Durchbruch oder eine Dünnstelle aufweisen, welcher den zurückklappbaren oder heraustrennbaren Bereich zumindest teilweise umgibt. Beispielsweise kann der zurückklappbare Bereich rund ausgestaltet sein und der Durchbruch kann eine diesen umgebende U-oder C-förmige Kontur, bzw. eine Kontur eines Teilumfanges eines Kreises aufweisen. Alternativ kann die gesamte Durchführöffnung mit einer Dünnstelle oder einer Membran verschlossen sein, welche unter Krafteinwirkung, wie z.B. bei Durchstechen mit einem Kabel, geöffnet werden kann. Alternativ oder ergänzend, kann das Abdichtelement zumindest bereichsweise durch einen Durchbruch der Gehäusewand in das Gehäuse hineinragen. Beispielsweise kann an dem Abdichtelement eine Hülse angeformt sein, welche die zweite Durchführöffnung umgibt und sich in die erste Richtung erstreckt. Die Hülse kann sich zumindest bereichsweise durch eine Durchführöffnung eines Unterteils, wie nachfolgend beschrieben, erstrecken.

Grundsätzlich können verschiedene Arten von Abdichtelementen miteinander kombiniert werden. Beispielsweise kann ein Abdichtelement (zumindest bereichsweise) bereits geöffnete, durchgängige (zweite) Durchführöffnungen aufweisen und ein weiteres in der ersten Richtung dahinter angeordnetes Abdichtelement kann (zweite) Durchführöffnungen aufweisen, welche initial durch eine Membran, eine Dünnstelle oder einen umklappbaren Bereich verdeckt oder verschlossen sind.

Das mindestens eine Abdichtelement kann für eine gute Dichtwirkung einen deformierbaren Kunststoff, wie beispielsweise Silikon, umfassen. Für eine einfach konfigurierbare Kabeleinführung kann die mindestens eine erste Durchführöffnung einen grösseren Durchmesser als die zweite Durchführöffnung aufweisen. Auf diese Weise kann die erste Durchführöffnung des Oberteils für unterschiedliche Kabeldurchmesser benutzt werden, ohne dass diese Öffnungen angepasst werden müssen. Das einfach anzupassende Abdichtelement kann hingegen eine kleinere (zweite) Durchführöffnung aufweisen. Für eine gute Dichtwirkung kann das einzuführende Kabel in Hinblick auf den Durchmesser der zweiten Durchführöffnung ein Übermass aufweisen.

Die Kabeleinführung umfasst weiter mindestens ein Befestigungsmittel zur Wirkverbindung der Kabeleinführung mit der Gehäusewand oder der Trennwand. Mit den Befestigungsmitteln kann das Oberteil an einer Gehäusewand befestigt werden, sodass das Abdichtelement in der Vertiefung zwischen dem Oberteil und der Gehäusewand eingeklemmt wird. Alternativ kann die Kabeleinführung ein Unterteil umfassen. Im montierten Zustand kann dann die erste Montageseite des Oberteils an einer zweiten Montageseite des Unterteils anliegen. Der zweiten Montageseite des Unterteils gegenüberliegend ist eine Befestigungsseite, mittels welcher das Unterteil, respektive die Kabeleinführung, an der Gehäusewand befestigbar ist. Alternativ kann jedoch ebenfalls das Oberteil an einer Aussenseite (gegenüberliegend der ersten Montageseite) an der Gehäusewand befestigbar sein, sodass das Unterteil als eine aussenseitige Abdeckung dient.

Das Unterteil umfasst mindestens eine sich in die erste Richtung erstreckende dritte Durchführöffnung zum Durchführen des mindestens einen Kabels durch die Kabeleinführung. Die dritte Durchführöffnung kann koaxial zu der ersten Durchführöffnung des Oberteils angeordnet sein. Eine Variante einer Kabeleinführung mit einem Ober- und einem Unterteil hat den Vorteil, dass das Abdichtelement von einem Gehäuse, gebildet von dem Oberteil und dem Unterteil, (mit Ausnahme der Durchführöffnungen) umschlossen werden kann. Beispielsweise kann so ebenfalls die Kabeleinführung komplett montiert werden, bevor diese an der Gehäusewand befestigt wird. Das Oberteil und/oder das Unterteil können jeweils aus multiplen Teilen oder einstückig ausgebildet sein. Je nach Ausgestaltung kann das Unterteil einen Absatz umfassen, welcher in einer montierten Position des Unterteils an dem Oberteil, zumindest bereichsweise in die Vertiefung des Oberteils ragt. Dies hat den Vorteil, dass der Absatz bei der Befestigung mittels den Befestigungsmittel das Abdichtelement weiter einklemmten und fixieren kann. Die Kontur des Absatzes kann in der ersten Richtung im Wesentlichen die gleiche Kontur wie die Vertiefung aufweisen. Mit Vorteil ist die mindestens eine dritte Durchführöffnung auf dem Absatz angeordnet bzw. die multiplen dritten Durchführöffnungen sind in einer Matrix auf dem Absatz angeordnet. Die Kontur der Vertiefung und/oder des Absatzes (in die erste Richtung) kann beispielsweise rechteckig sein. Andere Ausgestaltungen der Vertiefung und/oder des Absatzes sind ebenfalls denkbar. Der von der Vertiefung gebildete und von dem Absatz begrenzte Raum zwischen dem Oberteil und dem Unterteil kann als Aufnahmeraum für das mindestens eine Abdichtelement und/oder weitere Elemente (wie z.B. Grundplatten, Zugentlastungselemente oder Brandschutzplatten) dienen. Für eine einfach konfigurierbare Kabeleinführung haben die mindestens eine erste und/oder dritte Durchführöffnung einen grösseren Durchmesser als die zweite Durchführöffnung. Mit Vorzug sind die erste, zweite und dritte Durchführöffnung in die erste Richtung koaxial zueinander ausgerichtet. Jedoch sind ebenfalls versetzte Konfigurationen mit einer schrägen Einführung von Kabeln denkbar.

Das Unterteil und/oder das Oberteil umfassen vorteilhafterweise einen Partikelschaum. Die Verwendung von einem Partikelschaum bei der Herstellung des Unterteils und/oder das Oberteils hat den Vorteil von vergleichsweise geringen Gewicht bei einer hohen Festigkeit. Der Partikelschaum kann ein Polymerschaum, insbesondere ein expandierter Polymerschaum sein. Je nach Anwendung können dem Polymerschaum weitere Materialien und/oder Partikel zugemischt werden um die Materialeigenschaften an die Anwendung anzupassen. Mit Vorteil besteht das Unterteil und/oder das Oberteil jedoch zu 80% - 100% aus Polymerschaum. Mit Vorzug umfasst der Polymerschaum überwiegend geschlossen-zellige Schaumstoffpartikel. Gute Ergebnisse können erzielt werden, wenn die Partikel (vor dem Schäumen) eine Grösse von 0.8 - 8 mm, insbesondere 1.5 - 4 mm aufweisen. Das Partikelgewicht kann sich zwischen 0.5 - 1 mg bewegen. Als Partikelschaum kann beispielsweise ein expandiertes Polypropylen (EPP) verwendet werden, welches besonders energieabsorbierend bzw. stoss- und schlagfest ist. Zudem weist expandiertes Polypropylen den Vorteil auf, dass dieses ein vergleichsweise geringes Gewicht aufweist, und einfach bearbeitbar ist. Weiterhin weist expandiertes Polypropylen gute wärmeisolierende Eigenschaften auf und ist grösstenteils chemisch resistent. Neben diesen Aspekten ist expandiertes Polypropylen einfärbbar und kann einfach in seiner Oberflächenstruktur beeinflusst werden, was eine individuelle optische Gestaltung ermöglicht. Ebenfalls denkbar ist jedoch auch ein expandiertes Polystyrol (EPS) oder ein expandiertes Polyethylen (EPE).

Zur Herstellung der Kabeleinführung, respektive des Unterteils und/oder des Oberteils kann ein Verfahren von Partikelschaum-Verbundspritzgiessen verwendet werden. Hierbei können ebenfalls Teile der Befestigungsmittel, wie z.B. Gewindeeinsätze o.ä., und/oder eine stabilisierende Struktur und/oder eine Verstrebung eingesetzt und zumindest teilweise umspritzt, bzw. umschäumt werden. Die Umspritzung, bzw. Umschäumung, von Einsätzen o. ä. hat den Vorteil einer gleichmässigen und verbesserten Krafteinleitung in das umliegende Bauteil. Ebenfalls kann ein zwei-komponenten Verfahren verwendet werden, so dass zudem eine zweite Komponente aus einem anderem Material gespritzt wird. Beispielsweise kann ein zusätzliches, intumeszierendes (aufquellendes) Brandschutzmaterial gespritzt werden, bzw. das Oberteil und/oder das Unterteil können zumindest bereichsweise aus intumeszierendem Material bestehen. In einer möglichen Variante kann beispielsweise das Oberteil einen Partikelschaum (wie oben im Detail beschrieben), insbesondere aus EPP, umfassen und das Unterteil kann intumeszierendes (aufquellendem) Brandschutzmaterial (oder vice versa) umfassen. Alternativ kann jedoch auch eine separate Brandschutzplatte in der Vertiefung angeordnet sein. Weiterhin kann eine zweite Plastikkomponente verwendet werden um Einsätze oder andersartige Strukturen im oder am Ober- und/oder Unterteil zu formen.

Zur Befestigung der Kabeleinführung kann das mindestens eine Befestigungsmittel in der ersten Richtung neben der Vertiefung angeordnet sein. Mit Vorteil sind die Befestigungsmittel gleichmässig um die Vertiefung herum verteilt angeordnet. Die Befestigungsmittel können z.B. eine Schraubverbindung und/oder eine Schnappverbindung und/oder eine Klebverbindung sein. Mit Vorteil werden die Befestigungsmittel durch Befestigungsöffnungen mit darin angeordneten Befestigungselementen (z.B. Schrauben, Nägeln oder Schnappelementen) gebildet. Mit Vorteil erstrecken sich die Befestigungsmittel, respektive die Befestigungsöffnungen durch das Oberteil und, wenn vorhanden, das Unterteil. Es können mehrere Befestigungsmittel derselben oder unterschiedlicher Art gleichzeitig oder alternativ verwendet werden.

Die Kabeleinführung kann vorteilhafterweise in der ersten Richtung beidseitig mit dem Befestigungsmittel montiert werden. Eine Montage aus Richtung des Unterteils (rückseitige Montage) hat den Vorteil, dass eine gewisse Manipulationssicherheit von ausserhalb erreicht wird. Hierzu kann es ebenfalls von Vorteil sein, das Material des aussen liegenden Oberteiles aus einem resistenteren Material als das Unterteil auszugestalten und die Kabeleinführung somit gegen gewaltvolle äussere Einflüsse zu schützen. Eine Montage aus Richtung des Oberteils (vorderseitige Montage) ermöglichst wiederum einen einfachen Zugang für den Monteur. Alternativ kann die Kabeleinführung jedoch ebenfalls mit der Aussenseite des Oberteils an der Gehäusewand angebracht werden während das Unterteil als eine daran montierte Abdeckung dient. Für eine stabile Befestigung umfasst die Kabeleinführung vorteilhafterweise Befestigungsöffnungen mit je eine Hülse zum Durchführen des jeweiligen Befestigungselementes. Die Hülse kann im Oberteil und/oder im Unterteil (wenn vorhanden) angeordnet sein. Je nach Anwendung kann sich die Hülse von dem Oberteil in das Unterteil erstrecken und eine zusätzliche Zentrierung der Teile zueinander bewirken. Mit Vorteil weist die Hülse einen Flansch auf, mit welchem die Hülse auf einer radialen Schulter der Befestigungsöffnung in die erste Richtung fixiert werden kann. Die radiale Schulter kann im Oberteil oder im Unterteil angeordnet sein. Die mindestens eine Hülse kann aus Metall wie z.B. Aluminium oder Messing gefertigt sein.

Ebenfalls denkbar ist eine Befestigung mittels erster und zweiter Befestigungsmittel. Separate erste und zweite Befestigungsmittel haben den Vorteil, dass die Befestigung der Kabeleinführung mit der Gehäusewand (erste Befestigungsmittel) vom Prinzip her unabhängig von der Wirkverbindung des Oberteils mit dem Unterteil (über zweite Befestigungsmittel) durchführbar ist. Die zweiten Befestigungsmittel können ebenfalls z.B. eine Schraubverbindung und/oder eine Schnappverbindung und/oder eine Klebverbindung sein. Beispielsweise kann das Unterteil über erste Befestigungsmittel mit der Gehäusewand und das Oberteil mit zweiten Befestigungsmitteln am Unterteil und/oder am Gehäuse wirkverbunden werden. Bei Bedarf können ebenfalls die ersten und die zweiten Befestigungsmittel so ausgestaltet werden, dass zuerst das Oberteil über die zweiten Befestigungsmittel mit dem Unterteil wirkverbunden wird und dann das Oberteil oder das Unterteil über die ersten Befestigungsmittel am Gehäuse befestigt werden kann. Dies ermöglicht im Vergleich zum Stand der Technik einen flexiblen Aufbau und eine flexible Konfiguration von unterschiedlichen Kabelverschraubungen.

Je nach Anwendung kann das Abdichtelement ebenfalls eine Kabelverschraubung oder eine Schlauchverschraubung sein, welche an dem Oberteil und/oder dem Unterteil an der mindestens einen ersten und/oder dritten Durchführöffnung anbringbar ist. In einer montierten Position ist die Kabelverschraubung oder die Schlauchverschraubung zumindest bereichsweise in der Vertiefung angeordnet. Die Kabelverschraubung oder die Schlauchverschraubung dient zum Abdichten des durchgeführten Kabels. Mit Vorzug ist in diesem Fall ein Teil des Abdichtelementes, respektive der Kabelverschraubung oder der Schlauchverschraubung, an der Aussenseite des Oberteils angebracht und ein Teil des Abdichtelementes, respektive der Kabelverschraubung oder der Schlauchverschraubung, befindet sich in der Vertiefung des Oberteils, bzw. in dem Aufnahmeraum zwischen dem Ober- und dem Unterteil, wenn ein Unterteil vorhanden ist. Die Kabelverschraubung (oder respektive die Schlauchverschraubung) kann hierfür einen Stutzen zum Befestigen der Kabelverschraubung umfassen und eine über ein Gewinde mit dem Stutzen in der ersten Richtung wirkverbindbare Klemmmutter. Der Stutzen des Kabelverschraubung kann durch die erste Durchführöffnung des Oberteils und/oder die dritte Durchführöffnung des Unterteils ragen. Zwischen dem Stutzen und der Klemmmutter kann ein ein- oder mehrteiliges ringförmiges Klemmelement angeordnet sein. Das Klemmelement umfasst ein deformierbares Material und dient zum Festklemmen des Kabels in der Durchführöffnung, indem das Klemmelement durch Verschrauben der Klemmmutter gegenüber dem Stutzen nach innen zum Kabel hin deformiert wird. Weiterhin kann das Klemmelement zum Dichten des Kabels gegen die Kabelverschraubung dienen.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante einer erfindungsgemässen Kabeleinführung in einem auseinandergebauten Zustand;
- Fig. 2: Kabeleinführung gemäss Figur 1 in einem montierten Zustand an einer Gehäusewand;
- Fig. 3: Frontansicht der Kabeleinführung gemäss Figur 2;
- Fig. 4: Schnittansicht A-A gemäss Figur 3;
- Fig. 5: Schnittansicht B-B gemäss Figur 3.

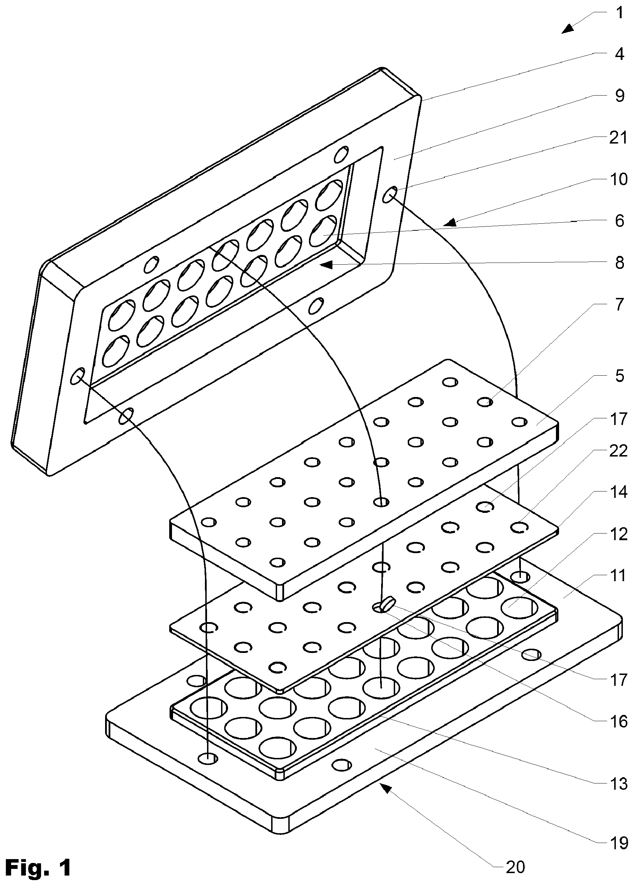

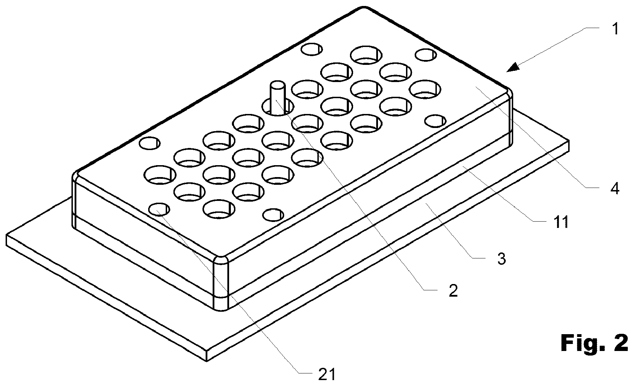

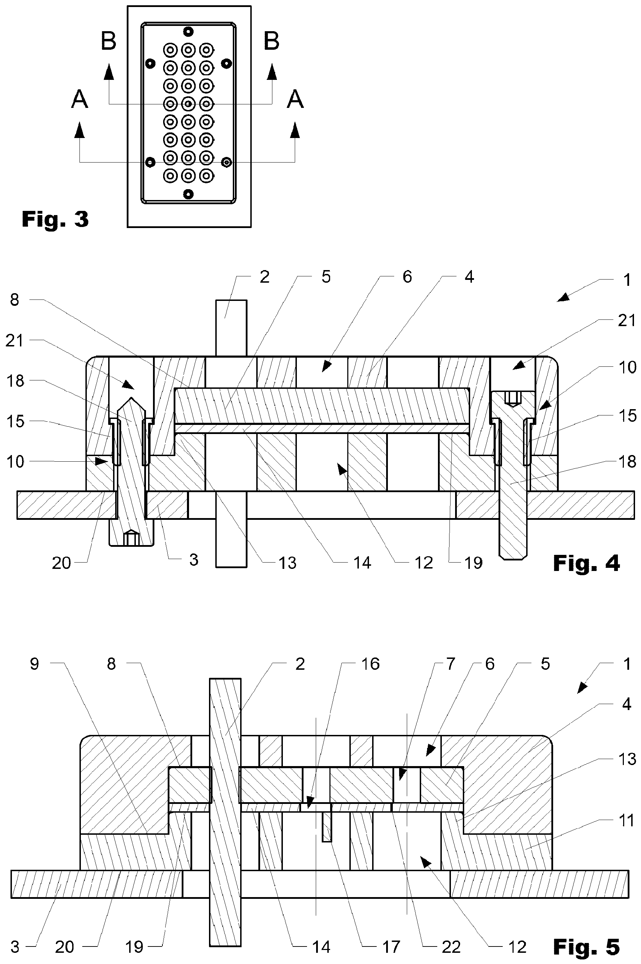

**Figur 1** zeigt ein Variante einer erfindungsgemässen Kabeleinführung 1 in einem auseinandergebauten Zustand. Der montierte Zustand an einer Gehäusewand 3 mit einem eingeführten Kabel 2 ist in **Figur 2** dargestellt. **Figur 4** zeigt einen Schnitt A-A durch die montierte Kabeleinführung 1 gemäss **Figur 3** mit Befestigungsmitteln 10 der Kabeleinführung 1 und **Figur 5** einen Schnitt B-B gemäss **Figur 3** durch das eingeführte Kabel 2.

Die Variante einer erfindungsgemässen Kabeleinführung 1 umfasst in der gezeigten Ausführungsform ein Oberteil 4 und ein Abdichtelement 5. Das Oberteil 4 weist zur Aufnahme des Abdichtelementes 5 an einer (ersten) Montageseite 9 eine Vertiefung 8 auf, in welche das Abdichtelement 5 montiert wird. Im gezeigten Fall wird das Oberteil 4 mit seiner Montageseite über ein Unterteil 11 an der Gehäusewand 3 befestigt, jedoch ist auch eine direkte Befestigung des Oberteils 4 an der Gehäusewand 3 denkbar. Die erste Montageseite 9 des Oberteils 4 liegt im montierten Zustand an einer zweiten Montageseite 19 des Unterteils 11 an. Der zweiten Montageseite 19 des Unterteils 11 gegenüberliegend ist eine Befestigungsseite 20, mittels welcher das Unterteil 11 an der Gehäusewand 3 befestigt wird. Auf der zweiten Montageseite 19des Unterteils 11 kann ein Absatz 13 vorhanden sein, welcher im montierten Zustand in die Vertiefung 8 des Oberteils 4 eingreift. Die Kontur des Absatzes 13 weist in der ersten Richtung im Wesentlichen die gleiche Kontur wie die Vertiefung 8 auf. Im gezeigten Fall ist die Kontur rechteckig. Andere Ausgestaltungen der Vertiefung 8 und/oder des Absatzes 13 sind ebenfalls denkbar. Zwischen der Vertiefung 8 und dem Absatz 13 in einem Aufnahmeraum ist das Abdichtelement 5 in Form einer Dichtplatte angeordnet. In der ersten Richtung hinter dem (ersten) Abdichtelement 5 (an der zweiten Montageseite anliegend) kann ein zweites Abdichtelement 14 angeordnet sein. Dieses kann alternativ auch in der ersten Richtung vor dem ersten Abdichtelement 5 angeordnet sein.

Zur Befestigung der Kabeleinführung 1 an der Gehäusewand 3 sind Befestigungsmittel 10 vorgesehen (vergleiche **Figur 4**). Die Befestigungsmittel 10 können neben und um die Vertiefung 8 herum angeordnet sein. Die Befestigungsmittel 10 umfassen im gezeigten Fall Befestigungsöffnungen 21, welche sich je durch das Oberteil 4 und das Unterteil 11 erstreckten mit einer in der Befestigungsöffnung 21 angeordneten Hülse 15. Die Hülse 15 weist einen umlaufenden Absatz oder Kragen auf, welcher gegen eine Schulter in der Befestigungsöffnung anliegt und die Hülse 15 in der ersten Richtung fixiert. Mit Vorteil ist die Hülse 15 aus Metall. Durch die Befestigungsöffnung 21 und durch die Hülse 15 kann entweder von der Rückseite (rückseitige Montage) oder von der Vorderseite (vorderseitige Montage) die Kabeleinführung 1 mit einem Befestigungselement 18 montiert werden. In **Figur 4** ist eine Schraube als Befestigungselement 18 gezeigt. Beide Varianten, die rückseitige als auch die vorderseitige Montage, sind in **Figur 4** abgebildet.

Zur Durchführung eines Kabels 2 (vergleiche **Figur 5**) weist das Oberteil 4 eine erste Durchführöffnung 6 und das erste Abdichtelement 5 eine zweite Durchführöffnung 7 auf. Im Unterteil 11 ist eine dritte Durchführöffnung 12 anzufinden. Mit Vorteil sind die erste, die zweite und die dritte Durchführöffnung 6, 7, 12 koaxial zueinander ausgerichtet, so wie abgebildet. Weiterhin ist ersichtlich, dass die erste und die dritte Durchführöffnung 6, 12 einen grösseren Durchmesser als die zweite, bzw. vierte Durchführöffnung 7 der Abdichtelemente 5, 14 aufweist. Dies hat den Vorteil, dass das erste und auch das zweite Abdichtelement 5,14 einfach je nach Anwendung konfiguriert werden können, während das Ober- und das Unterteil 4, 11 universeller verwendet werden können. Sämtliche Durchführöffnungen können sich in die erste Richtung erstrecken oder einen von dieser Richtung abweichenden Winkel aufweisen. Mit Vorteil sind die Durchführöffnungen zur Durchführung eines gleichen Kabels 2 jedoch koaxial zueinander ausgerichtet und erstrecken sich in die erste Richtung.

Das zweite Abdichtelement 14, wenn vorhanden, kann weiter einen zurückklappbaren Bereich 17 aufweisen, welcher in einem zurückgeklappten Zustand eine vierte Durchführöffnung 16 freigibt. Das zweite Abdichtelement 14 weist hierfür, wie in **Figur 1** ersichtlich, einen Durchbruch 22 auf, welcher den zurückklappbaren Bereiches 17 teilweise umgibt. In der gezeigten Variante ist der zurückklappbare Bereich 17 rund ausgestaltet und der Durchbruch 22 hat eine U-oder C-förmige Kontur, bzw. eine Kontur eines Teilumfanges eines Kreises. Je nach Ausgestaltung kann statt einem Durchbruch 22 auch eine Dünnstelle oder eine Membran vorgesehen sein, welche die vierte Durchführöffnung 16 initial verschliesst. Die Dünnstelle oder die Membran kann unter Krafteinwirkung geöffnet werden, so dass die vierte Durchführöffnung 16 durchgängig ist und ein Kabel 2 durch das Abdichtelement 14 durchgeführt werden kann.

Das Oberteil 4 und/oder das Unterteil 11 können beispielsweise einen Partikelschaum, insbesondere ein Polymerschaum, umfassen. Gute Ergebnisse werden bei der Verwendung von einem ein expandiertes Polypropylen erzielt. Die Abdichtelemente 5,14 sind mit Vorteil zumindest teilweise aus einem deformierbaren Kunststoff, wie z.B. Silikon geformt.

**LISTE DER BEZUGSZEICHEN**

| | | | |
|---|---|---|---|
| 1 | Kabeleinführung | 12 | Dritte Durchführöffnung |
| 2 | Kabel | 13 | Absatz |
| 3 | Gehäusewand | 14 | (Zweites) Abdichtelement |
| 4 | Oberteil | 15 | Hülse |
| 5 | (Erstes) Abdichtelement | 16 | Vierte Durchführöffnungen |
| 6 | Erste Durchführöffnung | 17 | Umklappbarer Bereich |
| 7 | Zweite Durchführöffnung | 18 | Befestigungselement |
| 8 | Vertiefung | 19 | (Zweite) Montageseite |
| 9 | (Erste) Montageseite | 20 | Befestigungsseite |
| 10 | Befestigungsmittel | 21 | Befestigungsöffnung |
| 11 | Unterteil | 22 | Durchbruch |

## Patentansprüche

1. Kabeleinführung (1) zur Einführung von mindestens einem Kabel (2) in ein Gehäuse mit
a. einem Oberteil (4) mit einer sich von einer Montageseite (9) in eine erste Richtung erstreckenden Vertiefung (8) und mit mindestens einer in der Vertiefung (8) angeordneten ersten Durchführöffnung (6) zum Durchführen des mindestens einen Kabels (2) durch die Kabeleinführung (1) und
b. mindestens einem zumindest bereichsweise in der Vertiefung (8) angeordneten Abdichtelement (5) mit mindestens einer zweiten Durchführöffnung (7) zum Abdichten des mindestens einen durchgeführten Kabels (2), und mit
c. mindestens einem Befestigungsmittel (10) zur Wirkverbindung der Kabeleinführung (1) mit einer Gehäusewand (3).

2. Kabeleinführung (1) gemäss Patentanspruch 1, **wobei** die Kabeleinführung (1) ein Unterteil (11) umfasst mit mindestens einer sich in die erste Richtung erstreckenden dritten Durchführöffnung (12) zum Durchführen des mindestens einen Kabels (2) durch die Kabeleinführung (1).

3. Kabeleinführung (1) gemäss Patentanspruch 2, **wobei** das Unterteil (11) einen Absatz (13) umfasst, welcher in einer montierten Position der Kabeleinführung (1) zumindest bereichsweise in die Vertiefung (8) des Oberteils (4) ragt.

4. Kabeleinführung (1) gemäss Patentanspruch 2 oder 3, **wobei** das Unterteil (11) und/oder das Oberteil (4) einen Partikelschaum umfasst.

5. Kabeleinführung (1) gemäss Patentanspruch 4, **wobei** der Partikelschaum ein Polymerschaum, insbesondere ein expandiertes Polypropylen ist.

6. Kabeleinführung (1) gemäss einem der vorangehenden Patentansprüche, **wobei** mehrere Abdichtelemente (5, 14) in der Vertiefung (8) in der ersten Richtung hintereinander und/oder nebeneinander angeordnet sind.

7. Kabeleinführung (1) gemäss einem der vorangehenden Patentansprüche, **wobei** die mindestens eine zweite Durchführöffnung (7) initial vor dem Einführen eines Kabels von einem zurückklappbaren oder heraustrennbaren Bereich verdeckt ist.

8. Kabeleinführung (1) gemäss einem der vorangehenden Patentansprüche, **wobei** das mindestens eine Abdichtelement (5) einen deformierbaren Kunststoff umfasst.

9. Kabeleinführung (1) gemäss einem der vorangehenden Patentansprüche, **wobei** das mindestens eine Befestigungsmittel (10) in der ersten Richtung neben der Vertiefung (8) angeordnet ist.

10. Kabeleinführung (1) gemäss einem Patentanspruch 9, **wobei** sich das Befestigungsmittel (10) durch das Oberteil (4) und das Unterteil (11) erstreckt.

11. Kabeleinführung (1) gemäss Patentanspruch 9 oder 10, **wobei** die Kabeleinführung (1) eine Hülse (15) zum Durchführen des mindestens einen Befestigungsmittels (10) umfasst.

12. Kabeleinführung (1) gemäss Patentanspruch 11,**wobei** die mindestens eine Hülse (15) Metall umfasst.

13. Kabeleinführung (1) gemäss einem der vorangehenden Patentansprüche, **wobei** die mindestens eine erste und/oder dritte Durchführöffnung (6,12) einen grösseren Durchmesser als die zweite Durchführöffnung (7) aufweist.

14. Kabeleinführung (1) gemäss einem der vorangehenden Patentansprüche, **wobei** die erste, zweite und dritte Durchführöffnung (6, 7, 12) in die erste Richtung koaxial zueinander ausgerichtet sind.
